# EUROPÄISCHE PATENTSCHRIFT

(11) **EP 4 531 542 B1**
(45) Veröffentlichungstag und Bekanntmachung des Hinweises auf die Patenterteilung: **05.08.2026**
(21) Anmeldenummer: 23734132.6
(22) Anmeldetag: 02.06.2023
(51) Int. Cl.: A01G 23/08, A01G 23/099

(54) **MARKIER-VORRICHTUNG**
MARKING DEVICE
DISPOSITIF DE MARQUAGE

(30) Priorität: 03.06.2022 AT 503952022
(43) Veröffentlichungstag der Anmeldung: 09.04.2025
(73) Patentinhaber: Beetle ForTech GmbH, 3430 Tulln an der Donau (AT)
(72) Erfinder: KOUACOU, Koimé-Simon, 3430 Tulln an der Donau (AT); NGUYEN, Thi Phuong Anh, 3430 Tulln an der Donau (AT); SAMMER, Matthias, 3430 Tulln an der Donau (AT); VOGLER, Sebastian Jakob, 3430 Tulln an der Donau (AT)
(74) Vertreter: Burger, Hannes Alfred
(86) Internationale Anmeldenummer: PCT/AT2023/060174
(87) Internationale Veröffentlichungsnummer: WO 2023/230641

(56) Entgegenhaltungen:
- EP-A1- 2 649 874
- WO-A1-99/23873
- DE-A1- 19 725 208
- US-B2- 9 485 922

## Beschreibung

Die Erfindung betrifft eine Vorrichtung zum Herstellen einer Markierung auf einem Baumstamm mit einem Schreibkopf entsprechend dem Oberbegriff von Anspruch 1.

Aus dem Stand der Technik sind bereits Markierungsvorrichtungen zum Anbringen von Markierungen auf von Bäumen erhaltenen Holzstücken bekannt. So beschreibt bereits das Dokument WO 99/23873 ein Verfahren zum Fällen von Bäumen und ein Forstwesensystem, wobei bei dem darin beschriebenen Holzernteverfahren die Position einer Erntemaschine im Zusammenhang mit dem Fällen eines Baumes - in Form einer Positionsinformation oder eines Codes - zur Markierung eines von dem Baum erhaltenen Holzstücks verwendet wird. Mit Hilfe der so erzeugten Markierung des Holzstücks kann später, nach dem Abtransport, die ursprüngliche Erntestelle und somit auch die Identität des Baumes festgestellt werden. Die beschriebene Markierungsvorrichtung weist einen Grundkörper mit aus einer Stirnseite wahlweise ausfahrbaren Stanzmitteln auf. Dabei ist eine Mehrzahl rasterartig angeordneter Stanzmittel vorgesehen, die wahlweise zwischen einer aktiven Markierungspositionen und einer inaktiven Ruhepositionen bewegbar sind. Unmittelbar nach dem Abschneiden eines Holzstücks von einem Baumstamm wird die Schnittfläche des Holzstücks durch Andrücken der mit den Stanzmitteln ausgestatteten Markierungsvorrichtung markiert. Die so erhaltene Markierung besteht aus einer Matrix von in das Ende des Holzstücks eingestanzten Löchern.

Eine Aufgabe der vorliegenden Erfindung war es, eine Vorrichtung zum Herstellen von Markierungen auf Baumstämmen zu schaffen, mit der eine höhere Zuverlässigkeit bei der Identifikation von Baumstämmen im Rahmen der Holznutzung, auf dem Weg vom Forst bis zur Verarbeitung in Sägewerken, erreicht werden kann.

Diese Aufgabe wird durch eine Vorrichtung gemäß den Ansprüchen gelöst.

Die Aufgabe der Erfindung wird durch eine Vorrichtung zum Herstellen einer Markierung auf einem Baumstamm mit einem Schreibkopf gelöst, bei der ein Wagen zum Verfahren des Schreibkopfs an einer Oberfläche des Baumstamms ausgebildet ist und der Schreibkopf ein Schneidwerkzeug umfasst, wobei ein Werkzeugträger ausgebildet ist, durch den das Schneidwerkzeug abwechselnd über eine Wagenunterseite ausfahrbar und zurückziehbar verstellbar ist.

Als vorteilhaft erweist sich, wenn der Wagen einen Motor und von dem Motor angetriebene Räder zur Vorwärtsbewegung des Wagens in einer Fahrtrichtung umfasst.

Gemäß einer vorteilhaften Weiterbildung der Vorrichtung ist vorgesehen, dass der Werkzeugträger einen Antrieb (z.B. einen Servomotor) zum Ausfahren und Zurückziehen des Schneidwerkzeugs in einer relativ zu der Wagenunterseite senkrechten Richtung umfasst.

Vorteilhafterweise umfasst die Vorrichtung eine Steuervorrichtung, wobei die Steuervorrichtung zur Erzeugung von Steuerbefehlen für die Vorwärtsbewegung mit dem Motor und zur Erzeugung von Steuerbefehlen für den Antrieb des Werkzeugträgers zum Bewegen des Schneidwerkzeugs ausgebildet ist.

Gemäß einer vorteilhaften Weiterbildung der Vorrichtung ist vorgesehen, dass das Schneidwerkzeug zwei, durch den Werkzeugträger unabhängig voneinander verstellbare Kettensägen umfasst.

Durch die Ausführung der Vorrichtung, wonach ein Sensor zur Detektion einer von dem Wagen in der Fahrtrichtung zurückgelegten Wegstrecke ausgebildet ist, wird der Vorteil erzielt, dass Fehler beim Schneiden der Markierung aufgrund von möglicherweise auftretendem Schlupf der Räder an der Oberfläche des Baumstamms weitestgehend vermieden werden können.

Von Vorteil ist auch, dass die Vorrichtung einen Sensor zum Empfang von Signalen eines Navigationssatelliten umfasst.

Gemäß einer vorteilhaften Ausbildung der Vorrichtung ist vorgesehen, dass eine Eingabevorrichtung zur manuellen Eingabe von Steuerbefehlen oder von Informationen bzw. von Daten in die Steuervorrichtung ausgebildet ist.

Von Vorteil ist insbesondere, wenn in der Steuervorrichtung der Vorrichtung ein ausführbares Programm gespeichert ist, wobei das Programm zum Codieren von Informationen und zum Erzeugen von entsprechenden Steuerbefehlen zum Schreiben der Markierung ausgebildet ist.

Gemäß einer Weiterbildung der Vorrichtung ist in dem Programm für die Erzeugung der Markierung die Codierung von zumindest einer Information aus einer Gruppe, umfassend eine eindeutige Identifikationsnummer, ein geografischer Standort des Baumstamms, ein kalendarisches Datum, ein Wert eines Durchmessers des Baumstamms, ein Wert einer ursprünglichen Gesamtlänge des Baumstamms, und die Kennnummer des verwendeten Geräts, vorgesehen.

Von Vorteil ist auch die Ausbildung der Vorrichtung, bei der das Programm zur Erzeugung eines die Markierung enthaltenden zweizeiligen Strichmusters mit Reihen von aufeinanderfolgenden Nuten mit einer Einheitslänge ausgebildet ist. Dabei kann beispielweise ein Wert der Einheitslänge mit ca. 2 cm und ein Wert der Gesamtlänge der Markierung mit etwa 60 cm gewählt werden.

Weiters ist es von Vorteil, wenn das Programm zur Erzeugung des Strichmusters in Gestalt eines Binärcodes mit der Bedeutung "Nut nicht vorhanden" = 0 und "Nut vorhanden" = 1 ausgebildet ist.

Gemäß einer besonders vorteilhaften Weiterbildung ist das Programm zur Erzeugung des Strichmusters unter Einhaltung einer regelmäßigen Strukturierung ausgebildet, wobei Nuten ausgebildet sein können und wobei zwischen unmittelbar aufeinanderfolgenden Nuten ein Spalt freigelassen ist. Somit ist die Ausbildung unterschiedlicher Code-Muster möglich, was eine automatisclie Erfassung und Dekodierung mit dafür vorgesehenen Scannern bzw. Lesegeräte erleichtert.

Zum besseren Verständnis der Erfindung wird diese anhand der nachfolgenden Figuren näher erläutert.

Es zeigen jeweils in stark vereinfachter, schematischer Darstellung:
- Fig. 1: eine Vorrichtung beim Herstellen einer Markierung an einem Baumstamm;
- Fig. 2: den Baumstamm mit einer bereits fertiggestellten Markierung;
- Fig. 3: die Vorrichtung zum Herstellen der Markierung gemäß Fig. 1 in Seitenansicht;
- Fig. 4: ein weiters Ausführungsbeispiel einer Vorrichtung zum Herstellen der Markierung auf einem Baumstamm;
- Fig. 5: den Baumstamm gemäß Fig. 2 in Draufsicht auf die Markierung;
- Fig. 6: ein Detail der Markierung gemäß Fig. 5 vergrößert dargestellt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

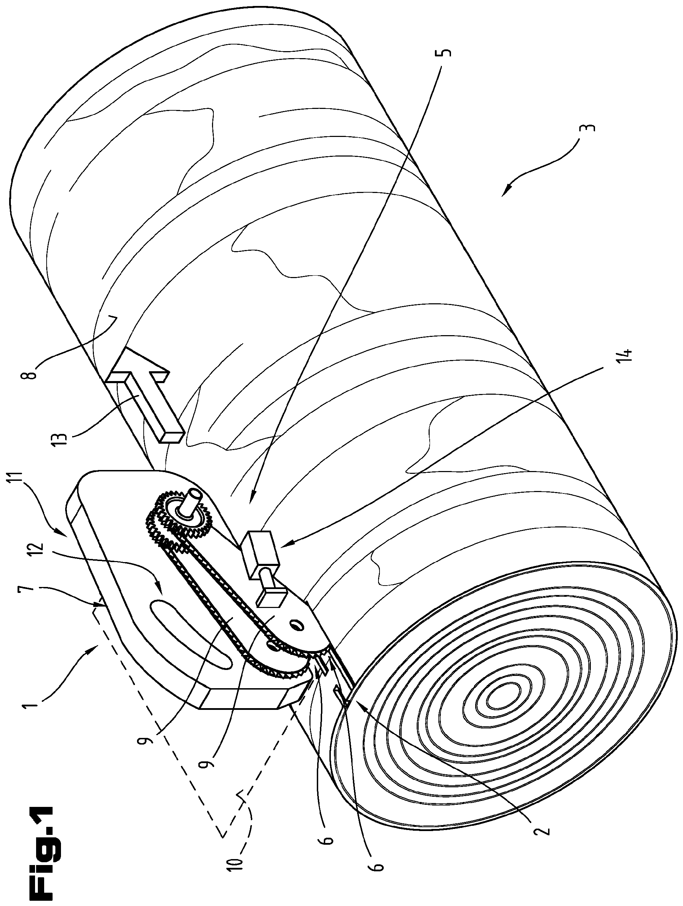

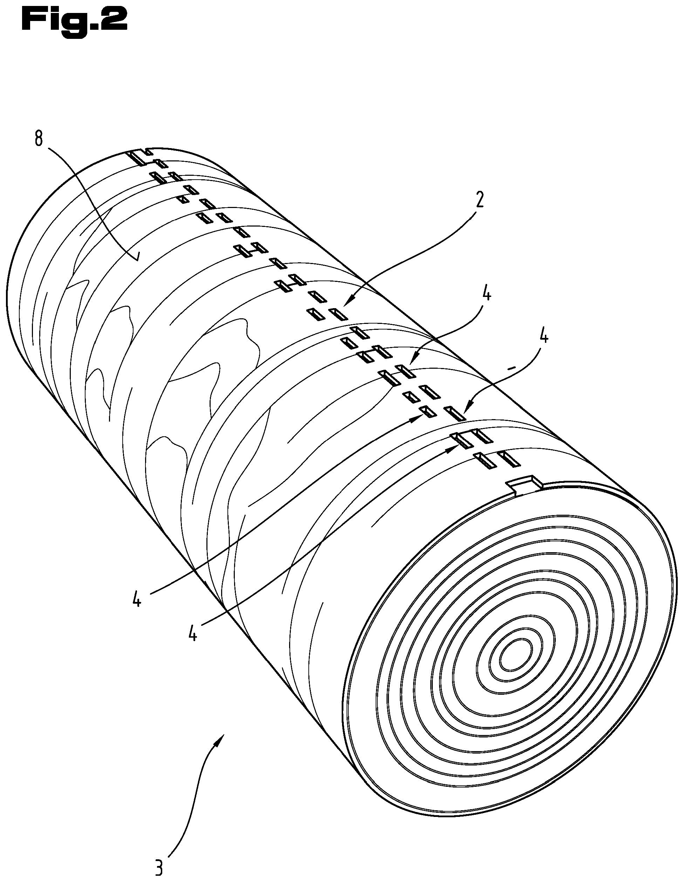

Anhand der beiden Fig. 1 und 2 wird an einem vereinfachten Modell die prinzipielle Funktionsweise der erfindungsgemäßen Markierung beschrieben. Die Fig. 1 zeigt eine Vorrichtung 1 beim Herstellen einer Markierung 2 an einem Baumstamm 3. Die Fig. 2 zeigt den Baumstamm 3 mit der bereits fertigen Markierung 2. Die Markierung 2 hat dabei die Gestalt eines Strichmusters, das im Wesentlichen parallel zu einer Längsrichtung des Baumstamms 3 verläuft und in die Rinde und das Holz des Baumstamms 3 gefräst ist. Die lineare Abfolge von Nuten 4 und dazwischenliegenden Leerstellen der Markierung 2 in dem Baumstamm 3 wird von der Vorrichtung 1 basierend auf einer vorgewählten Information in codierter Form in den Baumstamm 3 geschnitten bzw. "geschrieben".

Die Vorrichtung 1 weist zur Herstellung der Markierung 2 einen Schreibkopf 5 mit Schneidwerkzeugen 6 auf und wird mit Hilfe eines Wagen 7 der Vorrichtung 1 an einer Oberfläche 8 des Baumstamms 3 entlang bewegt bzw. entlang verfahren. Die Vorrichtung 1 bzw. deren Wagen 7 umfasst des Weiteren einen Werkzeugträger 9, durch den das Schneidwerkzeug 6 abwechselnd aus einer Wagenunterseite 10 ausgefahren bzw. zurückgezogen werden kann. Gemäß diesem Ausführungsbeispiel sind als Schneidwerkzeuge 6 z.B. zwei Sägeketten ausgebildet. Der Wagen 7 der Vorrichtung 1 weist an seiner Wagenunterseite 10 Rollen bzw. Räder auf (in Fig. 1 nicht dargestellt). Alternativ könnte z.B. auch ein Raupenantrieb vorgesehen sein. An einer Wagenoberseite 11 ist ein Griff 12 vorgesehen, mit dessen Hilfe die Vorrichtung 1 von einer Person gehalten und zum Markieren eines Baumstamms 3 geführt werden kann.

Bei diesem Ausführungsbeispiel der Vorrichtung 1 zum Herstellen der Markierung 2 kann an dem Baumstamm 3 ein aus zwei, nebeneinander verlaufenden Linien bestehendes Strichmuster geschnitten werden. Die Vorrichtung 1 wird dazu mit den Rollen auf einen vorzugsweise am Boden liegenden und bereits entasteten Baumstamm 3 gesetzt und in Längsrichtung über diesen gefahren. Während dieser Verfahrbewegung tauchen die beiden Schneidwerkzeuge 6 voneinander unabhängig und mit unterschiedlichen Längen bzw. dazwischenliegenden Pausen in die Rinde bzw. das Holz des Baumstamms 3 ein. Die dabei hergestellten Nuten 4 reichen durch die Rinde hindurch bis in das Holz. Dadurch wird erreicht, dass die Markierung 2 auch noch nach der Entfernung der Rinde von dem Baumstamm 3 erkannt bzw. gelesen werden kann.

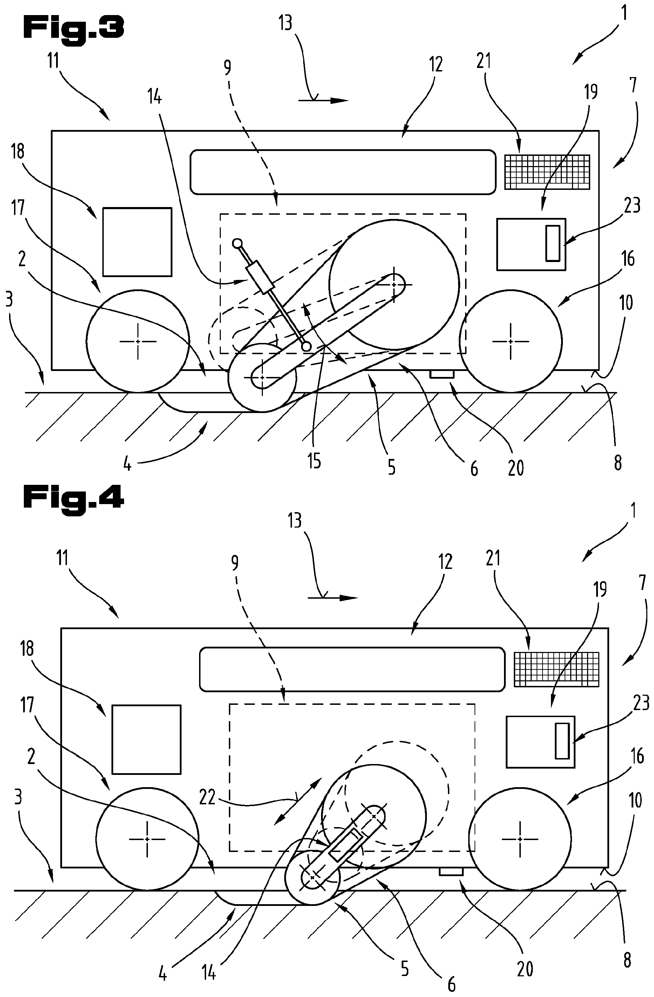

Die Fig. 3 zeigt die Vorrichtung 1 zum Herstellen der Markierung 2 gemäß Fig. 1 in Seitenansicht. Die Darstellung zeigt die Vorrichtung 1 bzw. deren Wagen 7 bei der Ausführung eines Bearbeitungsvorgangs zur Herstellung der Markierung 2 an dem Baumstamm 3 bzw. in der Oberfläche 8 des Baumstamms 3. Der Baumstamm 3 ist dabei zeichnerisch durch einen Längsschnitt durch den Baumstamm 3 im Bereich seiner Oberfläche 8 angedeutet. Der Wagen 7 der Vorrichtung 1 befindet sich in einem Bewegungszustand mit einer der Längserstreckung des Baumstamms 3 entsprechenden Fahrtrichtung 13 (in der Zeichenebene der Fig. 3 von links nach rechts). Das Schneidwerkzeug 6 wird in diesem Ausführungsbeispiel der Vorrichtung 1 z.B. durch eine Kettensäge gebildet. Der Werkzeugträger 9 verfügt dazu über ein durch einen Antrieb 14 verstellbares Kurbelgetriebe mit dessen Hilfe das Schneidwerkzeug 6 abwechselnd an der Wagenunterseite 10 ausgefahren und zurückgezogen werden kann. Eine dem Baumstamm 3 zugewandte Bearbeitungsseite der Kettensäge des Schneidwerkzeugs 6 wird bei dieser Ausführung durch Verschwenken zwischen einer Bearbeitungsstellung und einer inaktiven Stellung hin- und herbewegt. Gemäß der Darstellung in Fig. 3 befindet sich die Bearbeitungsseite der Kettensäge in einer in die Oberfläche 8 des Baumstamms 3 eingreifenden Bearbeitungsstellung, in der die Nut 4 der Markierung 2 geschnitten wird. Wie durch strichlierte Linien angedeutet, kann die Kettesäge mit Hilfe des Antriebs 14 entsprechend Pfeil 15 verschwenkt und somit zurückgezogen werden.

Die Herstellung der Markierung 2 in Gestalt eines Strichmusters in dem Baumstamm 3 mit der Vorrichtung 1 erfolgt durch eine Kombination der Vorwärtsbewegung des Wagens 7 in der Fahrtrichtung 13 und darauf abgestimmten Schneidbearbeitungen mit dem Schneidwerkzeug 6. Zur Vorwärtsbewegung weist der Wagen 7 motorisch angetriebene Räder 16, 17 auf, wofür ein Motor 18 vorgesehen ist. Aus Gründen der besseren Übersichtlichkeit sind zum Antrieb der Räder 16, 17 erforderliche Getriebe zwischen dem Motor 18 und den Rädern 16, 17 in der Fig. 3 nicht dargestellt. Alternativ kann auch vorgesehen sein, dass nur eine der beiden Achsen des Wagens 7 bzw. der beiden Räder 16, 17 direkt durch den Motor 18 angetrieben wird. Vorzugsweise werden aber beide Räder 16, 17 durch den Motor 18 angetrieben. Mit Hilfe entsprechender Getriebe können auch die beiden Kettensägen bzw. das Schneidwerkzeug 6 durch den Motor 18 angetrieben werden. Alternativ ist es aber auch möglich, dass die zur Schneidbearbeitung mit dem Schneidwerkzeug 6 erforderliche Leistung von einem separaten Motor (nicht dargestellt) aufbracht wird. Die Herstellung von Nuten 4 der Markierung 2 erfordert eine entsprechende Koordinierung von Schneidbearbeitungen mit dem Schneidwerkzeug 6 und der Vorwärtsbewegung des Wagens 7. D.h. die Ansteuerung der Schneidwerkzeuge 6 erfolgt entsprechend der vom Wagen 7 zurückgelegten Wegstrecke. Dafür ist die Vorrichtung 1 mit einer Steuervorrichtung 19 ausgestattet, mit deren Hilfe in der Markierung 2 zu codierende Informationen in entsprechende Steuerbewegungen des Motors 18 und des Antriebs 14 bzw. des Werkzeugträgers 9 übersetzt werden. Über einen Sensor 20 kann die entlang der Oberfläche 8 des Baumstamms 3 zurückgelegte Wegstrecke detektiert und von der Steuervorrichtung 19 erfasst werden. Basierend darauf können die Nuten 4 der Markierung 2 jeweils in der erforderlichen Länge geschnitten werden.

Zum Ein- und Ausschalten der Vorrichtung 1 als auch für die Eingabe sonstiger Daten und Informationen die bei der Herstellung der Markierung 2 an dem Baumstamm 3 berücksichtigt bzw. codiert werden sollen, weist die Vorrichtung 1 eine Eingabevorrichtung 21 auf. Ein Benutzer kann mit Hilfe der Eingabevorrichtung 21 beispielsweise auf sonstige Weise erhaltene Informationen über den Baumstamm 3 in die Steuervorrichtung 19 zur anschließenden Codierung und Berechnung der erforderlichen Steuerbefehle für die zu erzeugende Markierung 2 eingeben. Dies können beispielsweise Informationen sein, wie die ursprüngliche Gesamtlänge des Baumstamms 3 vor dessen Fällen bzw. Zerschneiden, der Durchmesser des Baumstamms 3, der geografische Standort des Baums beispielsweise angegeben durch die geografische Länge und die geografische Breite oder auch der Name des ursprünglichen Eigentümers.

Die Fig. 4 zeigt ein weiters Ausführungsbeispiel einer Vorrichtung 1 zum Herstellen der Markierung 2 auf einem Baumstamm 3. Die Darstellung zeigt dabei die momentane Situation während des Schneidens der Nut 4 der Markierung 2 in dem Baumstamm 3, das heißt während sich der Wagen 7 der Vorrichtung 1 in Fahrtrichtung 13 bzw. in Längsrichtung des Baumstamms 3 auf der Oberfläche 8 des Baumstamms 3 entlangbewegt. Der Schreibkopf 5 mit dem Schneidwerkzeug 6 weist dabei einen alternativ ausgebildeten Werkzeugträger 9 auf. Zwar umfasst das Schneidwerkzeug 6 auch bei dieser Ausführungsvariante zwei Kettensägen. Diese sind jedoch bei dem Werkzeugträger 9 derart gelagert, dass das Schneidwerkzeug 6 zum Ausfahren und Zurückziehen relativ zur Wagenunterseite 10 in senkrechter Richtung 22 bewegt wird. Relativ zu der Oberfläche 8 des Baumstamms 3 ergibt sich eine durch die Überlagerung der Bewegung des Schreibkopfs 5 in Richtung 22 mit der Vorwärtsbewegung des Wagens 7 erhaltene Relativbewegung. Das Schneidwerkzeug 6 des Schreibkopfs 5 wird dabei durch den Antrieb 14 zwischen der gegenüber der Wagenunterseite 10 ausgefahrenen Bearbeitungsstellung und einer in den Wagen 7 zurückgezogenen inaktiven Stellung (durch strichlierte Linien angedeutet) hin und zurück bewegt.

Die Ansteuerung des Motors 18 zum Antrieb der Räder 16, 17 und die Ansteuerung des Antriebs 14 zur Aktivierung bzw. Deaktivierung des Schneidwerkzeugs 6 erfolgt mit Hilfe eines in der Steuervorrichtung 19 verarbeiteten Programms 23. Das Programm 23 der Steuervorrichtung 19 ist derart ausgebildet, dass damit zunächst die für die Markierung 2 vorgesehenen Informationen in einen entsprechenden Code umgewandelt werden. Anschließend werden basierend auf dem so erhaltenen Code die erforderlichen Steuerbefehle zum Ansteuern des Motors 18 und des Antriebs 14 generiert. Der gesamte Herstellungsvorgang der Markierung 2 auf dem Baumstamm 3 steht somit unter der Kontrolle der Steuervorrichtung 19. Insofern die Vorrichtung 1 als ein von einer Bedienperson zu benutzendes Handgerät ausgebildet ist, verbleibt es die Aufgabe der Bedienperson die Vorrichtung 1 an dem Griff 12 zu halten und gegen die Oberfläche 8 des Baumstamms 3 zu drücken. Dies um Reaktionskräfte auf Grund der Schneidbearbeitung mit dem Schneidwerkzeug 6 zu kompensieren und einen Schlupf der Räder 16, 17 und somit eine Unterbrechung der Vorwärtsbewegung der Vorrichtung 1 in Fahrtrichtung 13 zu vermeiden. Der Bedienperson obliegt es auch, die Vorrichtung 1 derart an dem Baumstamm 3 entlangzuführen, dass schließlich ein möglichst gerader Verlauf der Markierung 2 auf der Oberfläche 8 des Baumstamms 3 erhalten wird (Fig. 2).

Die Vorrichtung 1 gemäß diesem Ausführungsbeispiel umfasst des Weiteren einen GNSS-Sensor 24. Die Bezeichnung "GNSS-Sensor" wird in dieser Beschreibung stellvertretend und der Einfachheit halber für einen Sensor zum Empfang von Positionssignalen verwendet. Durch den GNSS-Sensor 24 erfasste Standortinformation können dann durch das Programm 23 codiert und in eine dementsprechende Markierung 2 umgewandelt werden. Die von dem GNSS-Sensor 24 erhaltene Standortinformation kann somit selbst in codierter Form in der Markierung 2 enthalten sein. Mit einem entsprechenden Lesegerät, das heißt mit einem Scanner und mit einer Bilderfassungssoftware kann später die in der Markierung 2 enthaltene Information ausgelesen und decodiert werden. Dies macht es möglich, den Ursprung eines Baumstamms 3 anhand der daran angebrachten Markierung 2 feststellen zu können. Neben der Standortinformation, das heißt den entsprechenden GNSS-Daten, wird es zweckmäßig sein, beispielsweise auch das Datum/Uhrzeit bzw. eine Identifikationsnummer bei der Codierung zur Erzeugung der Markierung 2 zu berücksichtigen.

Alle Datenpunkte bzw. Informationen des Baumstamms 3 können von dem Programm 23 der Steuervorrichtung 19 zu einem gemeinsamen Datensatz zusammengefügt und in einem - beispielsweise über Internet zugänglichen - Archiv hinterlegt werden. Bei einem späteren Auslesen der Markierung 2 mit einem entsprechenden Lesegerät können anhand der erhaltenen Identifikationsnummern alle im Archiv hinterlegten Informationen des konkreten Baumstamms 3 abgefragt werden. Auf diese Weise ist ebenfalls eine Rückverfolgung des Ursprungs des konkreten Baumstamms 3 möglich.

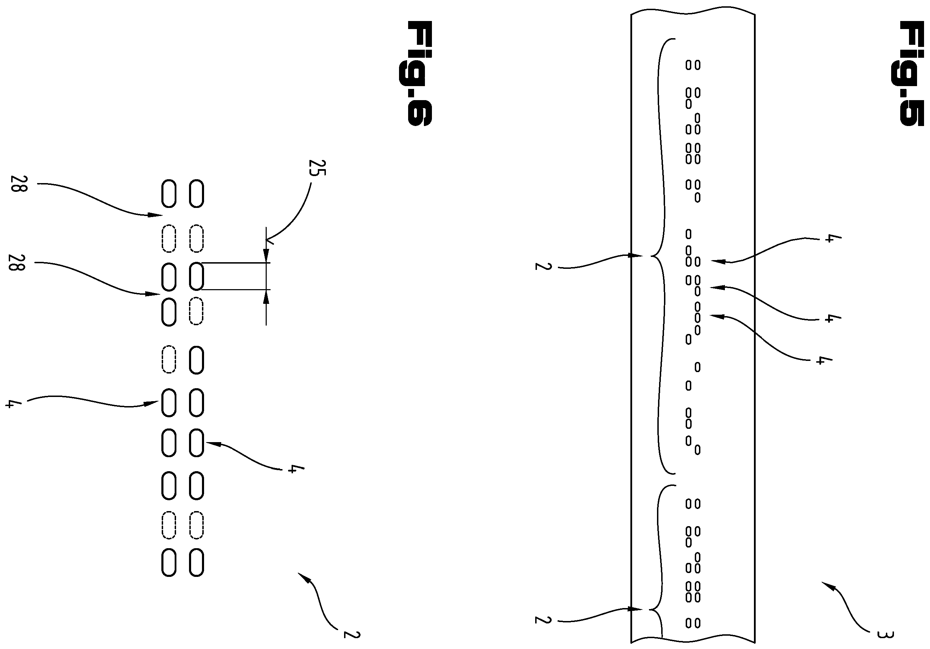

Anhand der nachfolgenden Fig. 5 und 6 wird exemplarisch eine Ausführungsform der mit der Vorrichtung 1 erzeugten Markierung 2 beschrieben. Die Fig. 5 zeigt den Baumstamm 3 gemäß Fig. 2 in Draufsicht auf die Markierung 2. Die Fig. 6 zeigt ein Detail der Markierung 2 gemäß Fig. 5 vergrößert dargestellt. Die Markierung 2 wird dabei durch ein zweizeiliges Strichmuster aus jeweils einer linearen Abfolge bzw. einer Reihe von Nuten 4 und dazwischenliegenden Leerstellen gebildet. Die Herstellung bzw. das Schneiden der Nuten 4 in dem Baumstamm 3 erfolgt dabei unter Einhaltung eines regelmäßigen Rasters bzw. einer regelmäßigen inneren Strukturierung. So repräsentiert eine Einheitslänge 25 einer kurzen Nut 4. bzw. eine entsprechend lange Leerstelle einen Informationspunkt (z.B. "Nut nicht vorhanden" = 0 und "Nut vorhanden" = 1). Durch das mehrfache Anbringen derselben Markierung 2 an einem Baumstamm 3 wird eine höhere Zuverlässigkeit der Daten-Persistenz erreicht. Damit können Beschädigungen, insbesondere der Rinde, des Baumstamms 3 beim Transport aber auch ein möglicher Datenverlust durch das Schneiden des Baumstamms 3 in mehrere Stücke berücksichtigt werden. Dadurch kann schließlich ein Lesegerät die physischen Längen der Nuten 4 als Anhaltspunkt zur späteren Dechiffrierung des zu Grunde liegenden Rasters heranziehen.

Bei den gegebenenfalls für sich eigenständigen Ausführungsformen der Vorrichtung 1 werden jeweils für gleiche Teile gleiche Bezugszeichen bzw. Bauteilbezeichnungen verwendet. Um unnötige Wiederholungen zu vermeiden, wird auf die detaillierte Beschreibung in den Fig. 3 und 4 hingewiesen bzw. Bezug genommen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Vorrichtung
- 2: Markierung
- 3: Baumstamm
- 4: Nut
- 5: Schreibkopf
- 6: Schneidwerkzeug
- 7: Wagen
- 8: Oberfläche
- 9: Werkzeugträger
- 10: Wagenunterseite
- 11: Wagenoberseite
- 12: Griff
- 13: Fahrtrichtung
- 14: Antrieb
- 15: Pfeil
- 16: Rad
- 17: Rad
- 18: Motor
- 19: Steuervorrichtung
- 20: Sensor
- 21: Eingabevorrichtung
- 22: Doppelpfeil
- 23: Programm
- 24: GNSS-Sensor
- 25: Einheitslänge
- 28: Spalte

## Patentansprüche

1. Vorrichtung (1) zum Herstellen einer Markierung (2) auf einem Baumstamm (3) mit einem Schreibkopf (5), **dadurch gekennzeichnet, dass** ein Wagen (7) zum Verfahren des Schreibkopfs (5) an einer Oberfläche (8) des Baumstamms (3) ausgebildet ist, wobei der Schreibkopf (5) ein Schneidwerkzeug (6) umfasst, und wobei ein Werkzeugträger (9) ausgebildet ist, durch den das Schneidwerkzeug (6) abwechselnd über eine Wagenunterseite (10) ausfahrbar und zurückziehbar verstellbar ist.

2. Vorrichtung (1) nach Anspruch 1, **dadurch gekennzeichnet, dass** der Wagen (7) einen Motor (18) und von dem Motor (18) angetriebene Räder (16, 17) zur Vorwärtsbewegung des Wagens (7) in einer Fahrtrichtung (13) umfasst.

3. Vorrichtung (1) nach Anspruch 1 oder 2, **dadurch gekennzeichnet, dass** der Werkzeugträger (9) einen Antrieb (14) zum Ausfahren und Zurückziehen des Schneidwerkzeugs (6) in einer relativ zu der Wagenunterseite (10) senkrechten Richtung (22) umfasst.

4. Vorrichtung (1) nach einem der vorhergehenden Ansprüche, **dadurch gekennzeichnet, dass** eine Steuervorrichtung (19) umfasst ist, wobei die Steuervorrichtung (19) zur Erzeugung von Steuerbefehlen für die Vorwärtsbewegung mit dem Motor (18) und zur Erzeugung von Steuerbefehlen für den Antrieb (14) des Werkzeugträgers (9) zum Bewegen des Schneidwerkzeugs (6) ausgebildet ist.

5. Vorrichtung (1) nach einem der vorhergehenden Ansprüche, **dadurch gekennzeichnet, dass** das Schneidwerkzeug (6) zwei, durch den Werkzeugträger (9) unabhängig voneinander verstellbare Kettensägen, Tauchsägen oder Oberfräser umfasst.

6. Vorrichtung (1) nach einem der vorhergehenden Ansprüche, **dadurch gekennzeichnet, dass** ein Sensor (20) zur Detektion einer von dem Wagen (7) in der Fahrtrichtung (13) zurückgelegten Wegstrecke ausgebildet ist.

7. Vorrichtung (1) nach einem der vorhergehenden Ansprüche, **dadurch gekennzeichnet, dass** ein Sensor (24) zum Empfang von Signalen eines Navigationssatelliten umfasst ist.

8. Vorrichtung (1) nach einem der vorhergehenden Ansprüche, **dadurch gekennzeichnet, dass** eine Eingabevorrichtung (21) zur manuellen Eingabe von Steuerbefehlen oder Informationen in die Steuervorrichtung (19) ausgebildet ist.

9. Vorrichtung (1) nach einem der vorhergehenden Ansprüche, **dadurch gekennzeichnet, dass** in der Steuervorrichtung (19) ein ausführbares Programm (23) gespeichert ist, wobei das Programm (23) zum Codieren von Informationen und zum Erzeugen von entsprechenden Steuerbefehlen zum Schreiben der Markierung (2) ausgebildet ist.

10. Vorrichtung (1) nach einem der vorhergehenden Ansprüche, **dadurch gekennzeichnet, dass** in dem Programm (23) für die Erzeugung der Markierung (2) die Codierung von zumindest einer Information aus einer Gruppe, umfassend
eine eindeutige Identifikationsnummer,
ein geografischer Standort des Baumstamms (3),
ein kalendarisches Datum,
ein Wert eines Durchmessers des Baumstamms (3),
ein Wert einer ursprünglichen Gesamtlänge des Baumstamms (3), und
die Kennnummer des verwendeten Geräts, vorgesehen ist.

11. Vorrichtung (1) nach einem der vorhergehenden Ansprüche, **dadurch gekennzeichnet, dass** das Programm (23) zur Erzeugung eines die Markierung (2) enthaltenden zweizeiligen Strichmusters mit Reihen von aufeinanderfolgenden Nuten (4) mit einer Einheitslänge (25) ausgebildet ist.

12. Vorrichtung (1) nach einem der vorhergehenden Ansprüche, **dadurch gekennzeichnet, dass** das Programm (23) zur Erzeugung des Strichmusters in Gestalt eines Binärcodes mit der Bedeutung "Nut (4) nicht vorhanden" = 0 und "Nut (4) vorhanden" = 1 ausgebildet ist.

13. Vorrichtung (1) nach einem der vorhergehenden Ansprüche, **dadurch gekennzeichnet, dass** das Programm (23) zur Erzeugung des Strichmusters unter Einhaltung einer regelmäßigen Strukturierung ausgebildet ist, wobei zwischen unmittelbar aufeinanderfolgenden Nuten (4) ein Spalt (28) freigelassen ist.

## Claims

1. A device (1) for creating a mark (2) on a tree trunk (3) using a writing head (5), **characterized in that** a carriage (7) is formed for moving the writing head (5) along a surface (8) of the tree trunk (3), wherein the writing head (5) comprises a cutting tool (6), and wherein a tool carrier (9) is provided, by means of which the cutting tool (6) is alternately adjustable by extension and retraction via a carriage bottom surface (10).

2. The device (1) according to claim 1, **characterized in that** the carriage (7) comprises a motor (18) and wheels (16, 17) driven by the motor (18) for moving the carriage (7) forward in a direction of travel (13).

3. The device (1) according to claim 1 or 2, **characterized in that** the tool carrier (9) comprises a drive (14) for extending and retracting the cutting tool (6) in a direction (22) perpendicular to the carriage bottom surface (10).

4. The device (1) according to one of the preceding claims, **characterized in that** it comprises a control device (19), wherein the control device (19) is configured to generate control commands for the forward movement with the motor (18) and to generate control commands for the drive (14) of the tool carrier (9) to move the cutting tool (6).

5. The device (1) according to one of the preceding claims, **characterized in that** the cutting tool (6) comprises two chainsaws, plunge saws, or router bits that can be adjusted independently of one another by the tool carrier (9).

6. The device (1) according to one of the preceding claims, **characterized in that** a sensor (20) is provided for detecting a path traveled by the carriage (7) in the direction of travel (13).

7. The device (1) according to one of the preceding claims, **characterized in that** it comprises a sensor (24) for receiving signals from a navigation satellite.

8. The device (1) according to one of the preceding claims, **characterized in that** an input device (21) for manually entering control commands or information into the control device (19) is formed.

9. The device (1) according to one of the preceding claims, **characterized in that** an executable program (23) is stored in the control device (19), wherein the program (23) is configured to encode information and to generate corresponding control commands for writing the mark (2).

10. The device (1) according to one of the preceding claims, **characterized in that**, in the program (23) for generating the mark (2), the encoding of at least one piece of information from a group comprising
a unique identification number,
a geographic location of the tree trunk (3),
a calendar date,
a value of a diameter of the tree trunk (3),
a value of an original total length of the tree trunk (3), and
the identification number of the device used, is provided.

11. The device (1) according to one of the preceding claims, **characterized in that** the program (23) for generating a two-line line pattern containing the mark (2) is configured with rows of successive grooves (4) having a unit length (25).

12. The device (1) according to one of the preceding claims, **characterized in that** the program (23) is configured to generate the line pattern in the form of a binary code with the meaning "groove (4) not present" = 0 and "groove (4) present" = 1.

13. The device (1) according to one of the preceding claims, **characterized in that** the program (23) for generating the line pattern is configured to maintain a regular structure, wherein a gap (28) is left between immediately successive grooves (4).

## Revendications

1. Dispositif (1) permettant de réaliser un marquage (2) sur un tronc d'arbre (3) comprenant une tête d'écriture (5), **caractérisé en ce qu'**un chariot (7) permettant de déplacer la tête d'écriture (5) est formé sur une surface (8) du tronc d'arbre (3), dans lequel la tête d'écriture (5) comprend un outil de coupe (6), et dans lequel un porte-outil (9) est conçu, par l'intermédiaire duquel l'outil de coupe (6) peut être déplacé en va-et-vient alternativement sur un côté inférieur de chariot (10).

2. Dispositif (1) selon la revendication 1, **caractérisé en ce que** le chariot (7) présente un moteur (18) et des roues (16, 17) entraînées par le moteur (18) pour déplacer le chariot (7) vers l'avant dans une direction de déplacement (13).

3. Dispositif (1) selon la revendication 1 ou 2, **caractérisé en ce que** le porte-outil (9) présente un entraînement (14) pour déplacer l'outil de coupe (6) en va-et-vient dans une direction (22) perpendiculaire au côté inférieur de chariot (10).

4. Dispositif (1) selon l'une quelconque des revendications précédentes, **caractérisé en ce qu'**il présente un dispositif de commande (19), dans lequel le dispositif de commande (19) est conçu pour générer des instructions de commande pour le déplacement vers l'avant à l'aide du moteur (18) et pour générer des instructions de commande pour l'entraînement (14) du porte-outil (9) afin de déplacer l'outil de coupe (6).

5. Dispositif (1) selon l'une quelconque des revendications précédentes, **caractérisé en ce que** l'outil de coupe (6) présente deux scies à chaîne, scies plongeantes ou fraises de détourage, qui peuvent être réglées indépendamment l'une de l'autre par le porte-outil (9).

6. Dispositif (1) selon l'une quelconque des revendications précédentes, **caractérisé en ce qu'**un capteur (20) est conçu pour détecter une distance parcourue par le chariot (7) dans la direction de déplacement (13).

7. Dispositif (1) selon l'une quelconque des revendications précédentes, **caractérisé en ce qu'**un capteur (24) est inclus pour recevoir des signaux d'un satellite de navigation.

8. Dispositif (1) selon l'une quelconque des revendications précédentes, **caractérisé en ce qu'**un dispositif d'entrée (21) est conçu pour entrer manuellement des instructions de commande ou des informations dans le dispositif de commande (19).

9. Dispositif (1) selon l'une quelconque des revendications précédentes, **caractérisé en ce qu'**un programme exécutable (23) est stocké dans le dispositif de commande (19), dans lequel le programme (23) est conçu pour coder des informations et générer des instructions de commande correspondantes pour écrire le marquage (2).

10. Dispositif (1) selon l'une quelconque des revendications précédentes, **caractérisé en ce que** dans le programme (23) de génération du marquage (2), le codage d'au moins une information d'un groupe comprend
un numéro d'identification unique,
une localisation géographique du tronc d'arbre (3),
une date calendaire,
une valeur d'un diamètre du tronc d'arbre (3),
une valeur d'une longueur totale initiale du tronc d'arbre (3), et
le numéro d'identification de l'appareil utilisé.

11. Dispositif (1) selon l'une quelconque des revendications précédentes, **caractérisé en ce que** le programme (23) est conçu pour générer un motif de tracé à deux lignes contenant le marquage (2) avec des rangées de rainures successives (4) d'une longueur unitaire (25).

12. Dispositif (1) selon l'une quelconque des revendications précédentes, **caractérisé en ce que** le programme (23) est conçu pour générer le motif de tracé sous la forme d'un code binaire ayant la signification « rainure (4) non présente » = 0 et « rainure (4) présente » = 1.

13. Dispositif (1) selon l'une des revendications précédentes, **caractérisé en ce que** le programme (23) de production du motif de tracé est réalisé en respectant une structuration régulière, dans lequel un intervalle (28) est libéré entre des rainures (4) immédiatement consécutives.
